# EUROPEAN PATENT APPLICATION

(11) **EP 4 365 265 A1**
(43) Date of publication of application: **08.05.2024**
(21) Application number: 22831598.2
(22) Date of filing: 01.06.2022
(51) Int. Cl.: C09K 19/44, G02F 1/139

(54) **LIQUID CRYSTAL COMPOSITION AND BISTABLE LIQUID CRYSTAL DIMMING DEVICE APPLYING SAME**

(30) Priority: 30.06.2021 CN 202110731111
(71) Applicant: Smart Liquid Crystal Technologies Co., Ltd., Suzhou, Jiangsu 215500 (CN)
(72) Inventor: SHEN, Wenqing, Suzhou, Jiangsu 215500 (CN); ZHANG, Hongwei, Suzhou, Jiangsu 215500 (CN); LI, Li, Suzhou, Jiangsu 215500 (CN); TANG, Jianhua, Suzhou, Jiangsu 215500 (CN); SHEN, Ximei, Suzhou, Jiangsu 215500 (CN)
(74) Representative: Zacco Sweden AB
(86) International application number: PCT/CN2022/096552
(87) International publication number: WO 2023/273777

(57) **Abstract**

The present invention relates to a liquid crystal composition. The liquid crystal composition comprises four compounds having different structural formulas and a chiral compound. The four compounds having different structural formulas are at least one compound selected from general formula I, at least one compound selected from general formula II, at least one compound selected from general formula III, and at least one compound selected from general formula IV, respectively. By optimizing the content of each component in the liquid crystal composition, a clearing point is improved while reducing a phase transition point of the N-TB. Also provided is a bistable liquid crystal dimming device prepared by applying the liquid crystal composition, which widens the working temperature range of the bistable liquid crystal dimming device, and improves the value of the bistable liquid crystal dimming device in practical applications.

## Description

The present application claims the priority of the invention patent application with an application date of June 30, 2021, an application number of CN202110731111.X and a title "a liquid crystal composition and a bistable liquid crystal light modulating device applying the same", the whole content of which is incorporated by reference in the present application.

### TECHNICAL FIELD

The present application relates to the field of liquid crystal display technology, in particular to a liquid crystal composition and a bistable liquid crystal light modulating device applying the same.

### BACKGROUND

With the improvement of architectural concept, the traditional glass with a relatively single function has been unable to meet the unprecedented new requirements of modern buildings in resource utilization, energy conservation and environmental protection, intelligent control and health benefits. By the action of electric field, the intelligent liquid crystal light modulating glass changes the light transmittance and the vision clarity of glass, thereby effectively controlling the entry of ultraviolet ray and infrared ray and the switching of clear and fog state, thus playing a role of energy conservation, environmental protection and privacy protection, which has attracted extensive research in the industry.

At present, the types of liquid crystal light modulating glass mainly comprise a PDLC intelligent light modulating glass, a dye liquid crystal light modulating glass and a bistable liquid crystal light modulating glass. The PDLC intelligent light modulating glass presents a hazy state in the power-off state and a transparent state in the power-on state, so as to realize the role of electronically controlled light modulating. However, because the PDLC intelligent light modulating glass presents a hazy state in the power-off state, it is more suitable for scenes with more privacy states, otherwise it will consume a lot of power; on the other hand, the transparent state of the PDLC intelligent light modulating glass still has large haze, and there is a problem of viewing angle. The dye liquid crystal light modulating glass can realize the brightness and darkness adjustment of light, but the dye liquid crystal applied to the dye liquid crystal light modulating glass has high cost and poor light stability; on the other hand, the dye liquid crystal is monostable and requires continuous power to maintain another state, and the cost of electricity is high. The bistable liquid crystal light modulating glass comprises two zero-electric field stable states: a transmission state which makes the incident light substantially transmitted and a hazy state which makes the incident light substantially scattered; the bistable liquid crystal modulating glass can be converted between the transmission state and the hazy state by selecting a suitable driving method to drive the bistable liquid crystal modulating glass, thus realizing the purpose of modulating light. It is not only energy saving and environmentally friendly, but also can reduce safety risks such as electric shock, so it is widely used in fields such as curtain walls, partition walls, and smart car windows.

However, the bistable liquid crystal light modulating glass still has some unsolved shortcomings such as the problem of narrow working temperature width, so it has limited application scenes, and the factors affecting the performance of the bistable liquid crystal light modulating glass mainly comprise the haze of planar texture state, helical structure of N-TB phase, phase-transition temperature of N-TB and clearing point. Therefore, it is necessary to select a suitable monomer, a dimer and a chiral agent material, fully consider the compatibility between the components and choose a suitable proportion to obtain a high-performance wide-temperature bistable liquid crystal composition.

### SUMMARY

A primary objective of the present application is to address the issue of the narrow working temperature range of current bistable liquid crystal light modulating devices,which limits their application in outdoor scenarios, and to provide a liquid crystal composition and a bistable liquid crystal light modulating device applying the same.

In order to achieve the above object, the present application provides a liquid crystal composition, comprising at least one compound selected from general formula I, at least one compound selected from general formula II, at least one compound selected from general formula III, at least one compound selected from general formula IV and at least one chiral compound:

R1-MG1-X-MG2-R2 (I);

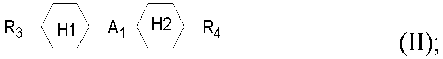

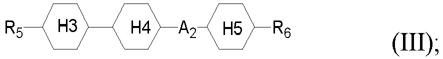

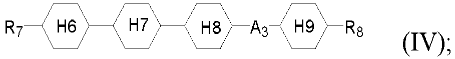

wherein, R1 and R2 are each independently -H, -F, -Cl, -CN, -NCS or an alkyl group having 1 to 25 C atoms;
MG1 and MG2 are each independently a mesogenic group;
X is a spacer group comprising 1 , 3 or 5 to 40 C atoms;
H1, H2, H3, H4, H5, H6, H7, H8 and H9 are each independently a first cyclic group selected from 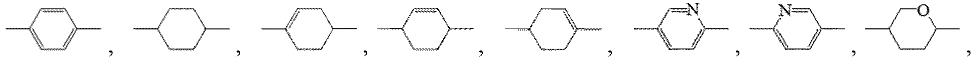 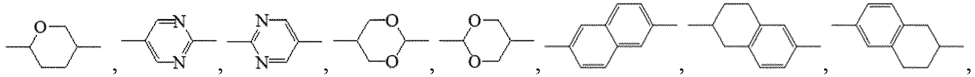 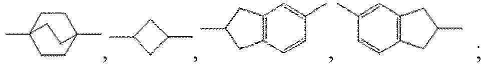
A₁, A₂ and A₃ are each independently -COO-, -OCO-, -CF₂O-, -OCF₂-, -CH₂O-, -OCH₂-, -C=C-, -CH=CH-, -CF₂CF₂-, -CF=CF-, a single bond or -(CH₂)ₐ-, wherein a denotes an integer from 2 to 10;
R₃, R₄, R₅, R₆, R₇ and R₈ are each independently -CN, -F, -Cl, -NCS, -OCF₃, -CF₃ or an alkyl group having 1 to 25 C atoms.

Furthermore, one or more H atoms in the alkyl group having 1 to 25 C atoms can be each independently substituted by halogen or -CN, and one or more nonadjacent -CH₂- can be each independentlysubstituted by -O-, -S-, -NH-, -N(CH₃)-, -CO-, -COO-, -OCO-, -OCOO-, -SCO-, - COS-, -CH=CH-, -CH=CF-, -CF=CF- or -C=C- in such a manner that oxygen atoms are not linked directly to one another.

Furthermore, one or more nonadjacent -CH₂- in the linear-chain or branched-chain alkylene group can be each independently replaced by -O-, -S-, -NH-, -N(CH₃)-, -CO-, -COO-, -OCO-, -OCOO-, -SCO-, -COS-, -CH=CH-, -CH=CF-, -CF=CF-, -C=C- or -CH(CN)- in such a manner that oxygen atoms and two groups selected from -OCO-, -SCO-, -OCOO-, -COS-, -COO- or -CH=CH-are each independently not linked directly to one another.

Furthermore, one or more H atoms in the first cyclic group can be each independently substituted by halogen, an alkyl group having 1 to 10 C atoms or an ester group.

Furthermore, one or more nonadjacent -CH₂- in the alkyl chain group group having 1-25 C atoms can be each independently replaced by -O-, -S-, -NH-, -N(CH₃)-, -CO-, -COO-, -OCO-, -OCOO-, -SCO-, -COS-, -CH=CH-, -CH=CF-, -CF=CF- or -C=C-; one or more H atoms in the chain alkyl group can be each independently substitued by halogen, -CN or -CH₃.

Furthermore,MG1 and MG2 are of the general formula V: 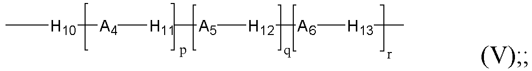
wherein, H₁₀, H₁₁, H₁₂ and H₁₃ are each independently a second cyclic group selected from 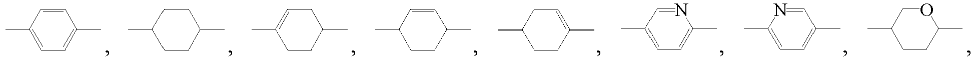 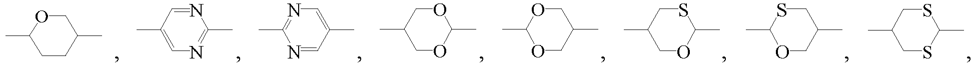 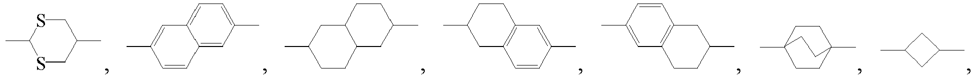 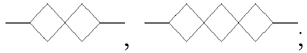
A₄, A₅ and A₆ are each independently -COO-, -OCO-, -OCOO-, -OCH₂-, -CH₂O-, -CF₂O-, - (CH₂)₂-, -(CH₂)₄-, -C=C-, -CH=CH-, -CF₂CF₂-, -CF=CF-, -CH=CH-COO-, -OCO-CH=CH- or a single bond;
p in each occurrence independently is 0 or 1;
q in each occurrence independently is 0 or 1;
r in each occurrence independently is 0 or 1.

Furthermore, 1 to 4 H atoms in the second cyclic group can be each independently substituted by halogen, CN or an alkyl group having 1 to 7 C atoms.

Furthermore, the spacer group X is of formula VI: 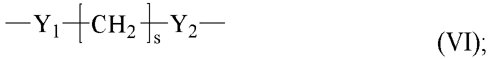 wherein, Y₁ and Y₂ are each independently -COO-, -OCO-, -O-, -CH=CH-, -CF₂O-, -OCF₂-, - CF₂CF₂- or a single bond, and s is an odd number from 3 to 13.

Furthermore,the liquid crystal composition contains 10% to 50% by mass of at least one compound selected from the compounds represented by general formula I.

Furthermore, the liquid crystal composition contains 20% to 40% by mass of at least one compound selected from the compounds represented by general formula I.

Furthermore, the liquid crystal composition contains 25% to 35% by mass of at least one compound selected from the compounds represented by general formula I.

Furthermore,the liquid crystal composition contains 10% to 34.5% by mass of at least one compound selected from the compounds represented by general formula II .

Furthermore,the liquid crystal composition contains 15% to 34.5% by mass of at least one compound selected from the compounds represented by general formula II .

Furthermore, the liquid crystal composition contains 20% to 50% by mass of the sum of compound selected from the compounds represented by general formula III and IV

Furthermore, the liquid crystal composition contains 20% to 40% by mass of the sum of compound selected from the compounds represented by general formula III and IV

Furthermore, the liquid crystal composition contains 0% to 20% by mass of at least one compound selected from the compounds represented by general formula IV

Furthermore, the liquid crystal composition contains 1% to 20% by mass of at least one compound selected from the compounds represented by general formula IV

Furthermore, the chiral compound comprises at least one of R01, R02, R03, R04, R05, R06, L01, L02, L03, L04 and L05.

Furthermore, the liquid crystal composition contains 5% to 20% by mass of the chiral compound.

Furthermore, the liquid crystal composition also comprises at least one polymerizable monomer.

Furthermore, the liquid crystal composition also comprises at least one polymerizable initiator.

In order to achieve the above object, the present application also provides a bistable liquid crystal light modulating device, comprising a first transparent conductive substrate and a second transparent conductive substrate, wherein the first transparent conductive substrate and the second transparent conductive substrate are disposed opposite to one another;
a liquid crystal layer is disposed in between the first transparent conductive substrate and the second transparent conductive substrate, wherein the liquid crystal layer comprises the above liquid crystal composition; wherein the liquid crystal layer can be switched between at least two zero-electric field stable states by applying an external electric field to the said first and second transparent conductive substrates, wherein one of the stable state is a transparent state that transmits incident light, and the other a hazy state that scatters incident light.

Furthermore, the haze of the transmission state is not more than 10%.

Furthermore, the haze of hazy state is not less than 85%.

The beneficial effects of the present application are that the present application provides a liquid crystal composition, and by optimizing the content of each component in the liquid crystal mixtures, namely, the content of each component in the liquid crystal composition, the clearing point is increased while the N-TB phase transition point is reduced; and the present application provides a bistable liquid crystal light modulating device prepared by applying the above liquid crystal composition, which widens the working temperature range of the bistable liquid crystal light modulating device, and improves its practical value.

### DETAILED DESCRIPTION

In order to achieve the above objects, the technical solutions in the examples of the present application are clearly and completely described below,; The described examples are partial examples of the present application, and obviously, not all examples. Based on the examples of the present application, all other examples obtained by those of ordinary skill in the art without creative labor are within the protection scope of the present application.

As an important component of the bistable liquid crystal light modulating glass, a bimesogenic compound (which refers to a liquid crystal compound containing two mesogenic units in its molecule) can induce the second nematic phase (twisted-bended nematic phase, that is, N-TB phase) due to its special structure, and a relatively high splay elastic constant K11, a relatively low bend elastic constant K33 and a relatively low twist elastic constant K22 can be obtained after adding a chiral nematic phase liquid crystal. When K33 ≈ K22, the liquid crystal molecule can be directly recovered from a planar texture state to an homeotropic texture state, achieving a perfect planar state with minimal haze. Therefor the haze of the planar texture state is directly related to the content of the bimesogenic compound, and the planar texture state generally has high haze at low dimer content. In addition, when K11/K22 is more than 2, the helical structure of the N-TB phase is relatively stable, allowing for the achievement of the bistable state of the transmission state and the hazy state can be achieved by adjusting the K value. However, when the temperature is close to or less than the N-TB phase temperature, the liquid crystal will have phase transition, and the liquid crystal molecule is difficult to recover from the homec tropic texture state to the planar texture state and cannot become transparent. It can be seen from the patent CN109825309A and CN112130362A that a nematic phase liquid crystal with a positive dielectric constant is added with a chiral agent to obtain a cholesteric liquid crystal, and then added with a bimesogenic compound, which can achieve the haze of transmission state less than 10% and the haze of the hazy state more than 85%. However, when an operating test is performed according to the components and steps in the above two patents, it is found that the clearing point is low (< 90°C), and the N-TB point is high (> -15°C), at this point, when the temperature is reduced to -10°C, the homec tropic texture state becomes difficult to recover to the planar texture state, resulting in the retention of the hazy state. Additionally, a low clearing point can also lead to low hazy state haze during operation at high temperatures, which cannot be maintained..

According to the conclusion of the paper "Double-helical Tiled chain structure the twist-bend liquid crystal phase in CB7CB)"authored by Michael R. Tuchband and Min Shuai et al., it is found that the clearing point and the temperature of the N-TB point monotonically decreaseas the dimer content decreases. Therefore, a decrease in dimer content can reduce the N-TB phase transition temperature but increase the haze of the planar texture state and decrease the clearing point; Increasing the content of the three-ring and four-ring liquid crystal monomer can effectively increase the temperature of the clearing point but also increase the temperature of the N-TB point to a certain extent. This alteration of the helical structure of the N-TB phase also has a certain impact on the stability of the hazes of the planar texture state and focal conic texture state.

1. From the influence of each component in the above liquid crystal composition on the performance of the bistable liquid crystal light modulating device, the present application aims to solve a problem that current bistable liquid crystal light modulating device has narrow working temperature range. Specifically, when the working temperature is lower than -10°C, the liquid crystal molecule in the bistable liquid crystal light modulating device is difficult to return from the homec tropic texture state to the planar texture state state after the power off. In other words, the bistable liquid crystal light modulating device cannot return to the transparent state after the power off. The above general formula I is R1-MG1-X-MG2-R2; wherein, R1 and R2 are each independently -H, -F, -Cl, -CN, -NCS or an alkyl group having 1 to 25 C atoms, as a preferred embodiment, one or more H atoms in the alkyl group having 1 to 25 C atoms can be each independently substituted by halogen or -CN; one or more nonadjacent -CH₂- in the alkyl group can be each independently substituted by -O-, -S-, -NH-, -N(CH₃)-, -CO-, -COO-, -OCO-, - OCOO-, -SCO-, -COS-, -CH=CH-, -CH=CF-, -CF=CF- or -C=C-in such a manner that oxygen atoms are not linked directly to one another; MG1 and MG2 are each independently a mesogenic group; X is spacer group comprising 1 , 3 or 5 to 40 C atoms, as a preferred embodiment, one or more nonadjacent -CH₂- in the linear-chain or branched-chain alkylene group can be each independently substituted by -O-, -S-, -NH-, -N(CH₃)-, -CO-, -COO-, -OCO-, -OCOO-, -SCO-, - COS-, -CH=CH-, -CH=CF-, -CF=CF-, -C=C- or -CH(CN)-, in such a manner that oxygen atoms and two groups selected from -OCO-, -SCO-, -OCOO-, -COS-, -COO- or -CH=CH- are each independently not linked directly to one another. 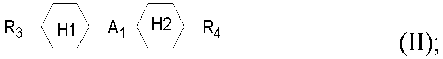 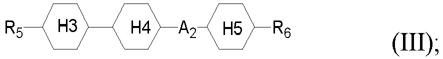 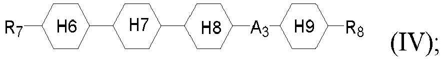
wherein, H1, H2, H3, H4, H5, H6, H7, H8 and H9 are each independently a first cyclic group selected from 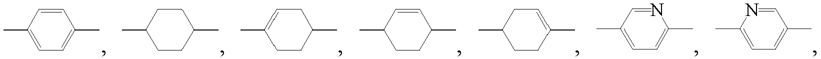 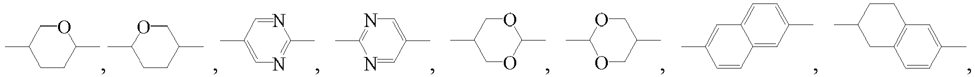 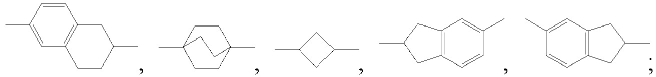 as a preferred embodiment, one or more H atoms in the first cyclic group can be each independently substituted by halogen, a chain alkyl group having 1 to 10 C atoms or an ester group;
A₁, A₂ and A₃ are each independently -COO-, -OCO-, -CF₂O-, -OCF₂-, -CH₂O-, -OCH₂-, -C=C-, -CH=CH-, -CF₂CF₂-, -CF=CF-, a single bond or -(CH2)ₐ-, wherein a denotes an integer from 2 to 10;
R₃, R₄, R₅, R₆, R₇ and R₈ are independently -CN, -F, -Cl, -NCS, -OCF₃, -CF₃ or an alkyl group having 1 to 25 C atoms, as a preferred embodiment, one or more nonadjacent -CH₂- in the alkyl group having 1 to 25 C atoms can be each independently substituted by -O-, -S-, -NH-, -N(CH₃)-, -CO-, -COO-, -OCO-, -OCOO-, -SCO-, -COS-, -CH=CH-, -CH=CF-, -CF=CF- or -C=C-; one or more H atoms in the alkyl group can be each independently substituted by halogen, -CN or -CH₃.

In the present application, as a preferred embodiment, MG1 and MG2 are of the general formula V 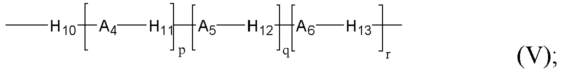
wherein, H₁₀, H₁₁, H₁₂ and H₁₃ are each independently a second cyclic group selected from 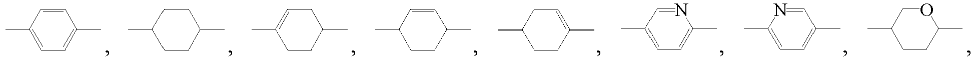 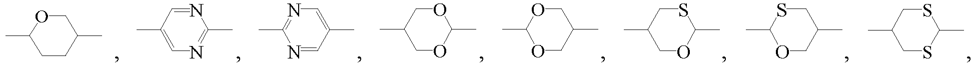 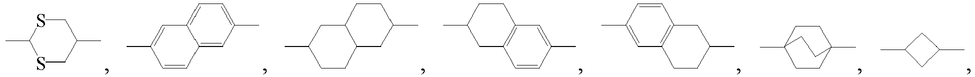 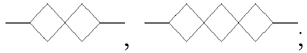 as a preferred embodiment, 1 to 4 H atoms in the second cyclic group can be each independently substituted by halogen, CN or an alkyl group having 1 to 7 C atoms; at least one -CH₂- in the alkyl group having 1 to 7 C atoms can be substituted by -CHO-, -CO-, -COO- or -OCO-, at least one H atom in the alkyl group having 1 to 7 C atoms can be substituted by F or Cl;
A₄, A₅ and A₆ are each independently -COO-, -OCO-, -OCOO-, -OCH₂-, -CH₂O-, -CF₂O-, - (CH₂)₂-, -(CH₂)₄-, -C=C-, -CH=CH-, -CF₂CF₂-, -CF=CF-, -CH=CH-COO-, -OCO-CH=CH- or a single bond;
p in each occurrence independently is 0 or 1;
q in each occurrence independently is 0 or 1;
r in each occurrence independently is 0 or 1.

In the present application, as a preferred embodiment, the spacer group X is of formula VI: 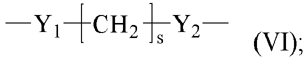 wherein, Y₁ and Y₂ are each independently -COO-, -OCO-, -O-, -CH=CH-, -CF₂O-, -OCF₂-, - CF₂CF₂- or a single bond, and s is an odd number from 3 to 13.

In the present application, as a preferred embodiment, the liquid crystal composition contains 10% to 50% by mass of at least one compound selected from the compounds represented by general formula I As a further preferred embodiment, the liquid crystal composition contains 20% to 40% by mass of at least one compound selected from the compounds represented by general formula I. As an even further preferred embodiment, the liquid crystal composition contains 25% to 35% by mass of at least one compound selected from the compounds represented by general formula I.

In the present application, as a preferred embodiment,the liquid crystal composition contains 10% to 34.5% by mass of at least one compound selected from the compounds represented by general formula II . As a further preferred embodiment, the liquid crystal composition contains 15% to 34.5% by mass of at least one compound selected from the compounds represented by general formula II. As a preferred embodiment,the liquid crystal composition contains 20% to 50% by mass of the sum of compound selected from the compounds represented by general formula III and IV. As a further preferred embodiment,the liquid crystal composition contains 20% to 40% by mass of the sum of compound selected from the compounds represented by general formula III and IV. As a preferred embodiment, the liquid crystal composition contains 0% to 20% by mass of at least one compound selected from the compounds represented by general formula IV As a preferred embodiment,the liquid crystal composition contains 1% to 20% by mass of at least one compound selected from the compounds represented by general formula IV

In the present application, as a preferred embodiment, the compound of the general formula I can be selected from any one of the following compounds: 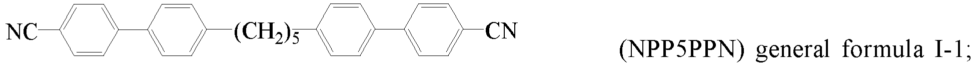 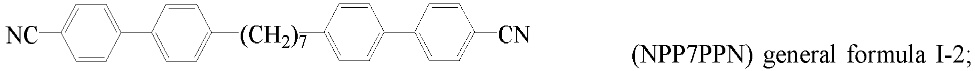 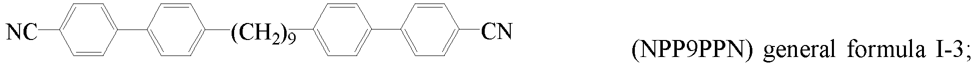 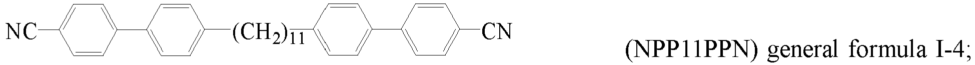 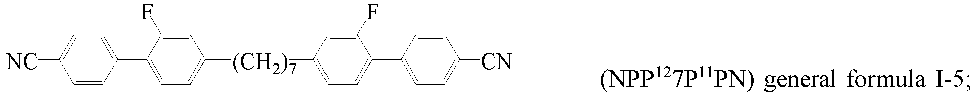 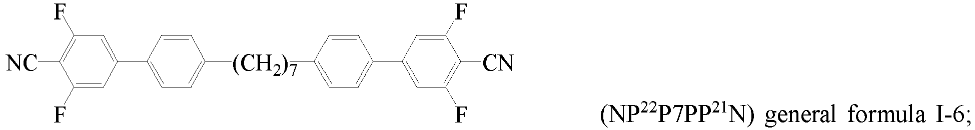 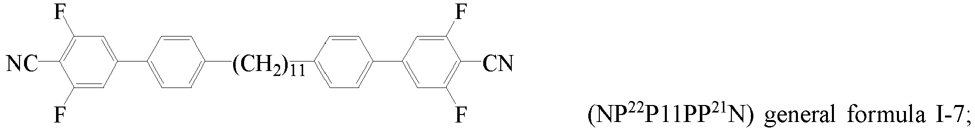 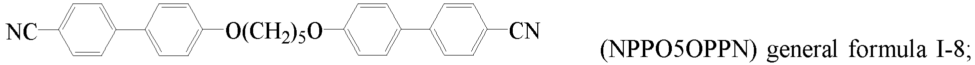 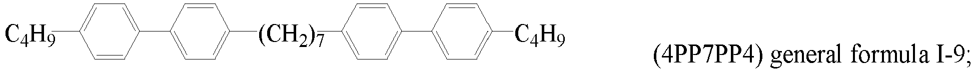 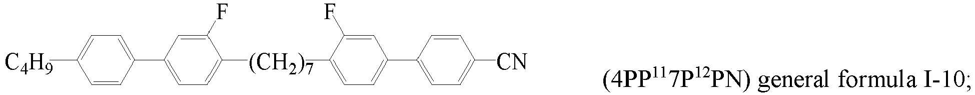 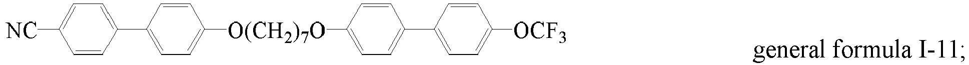 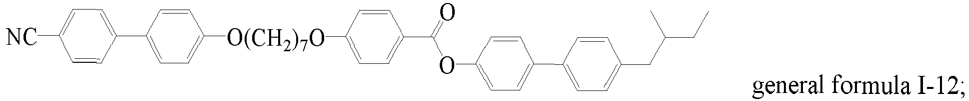 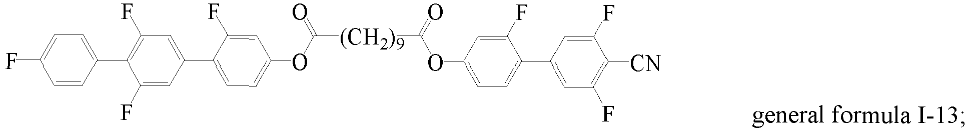 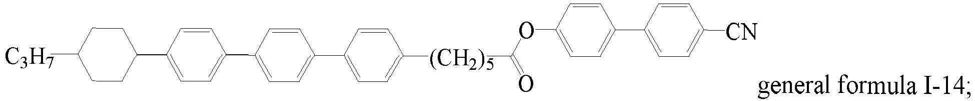 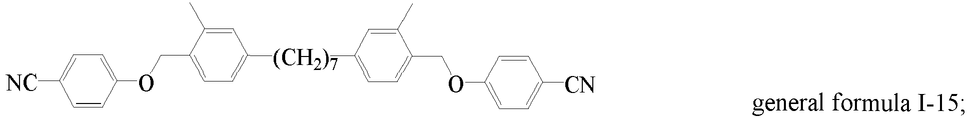 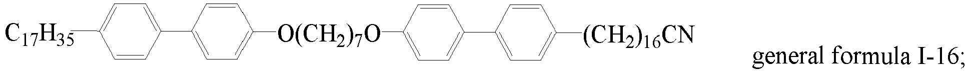 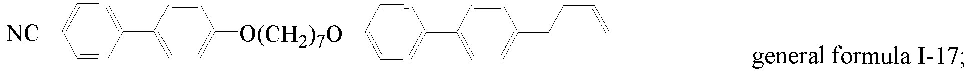 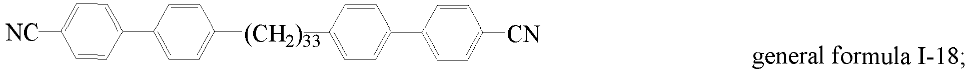 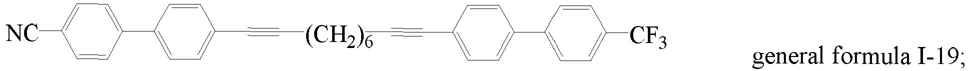 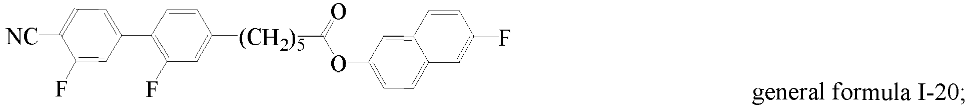 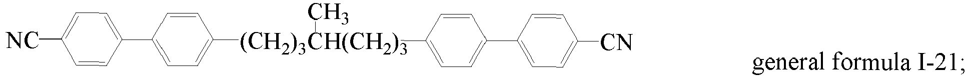 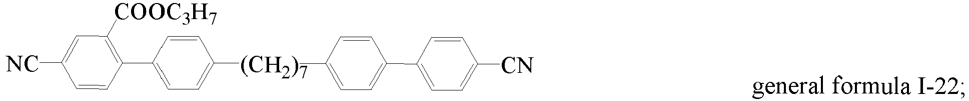 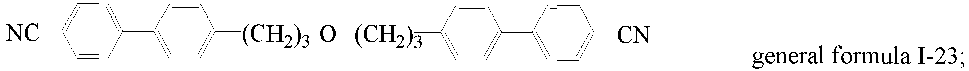 as a further preferred embodiment, the compound of the general formula I is further selected from the compounds composed of the general formula I-1 to the general formula I-10.

In the present application, as a preferred embodiment, the compound of the general formula II may be selected from any one of the following compounds: 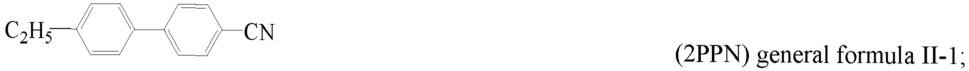 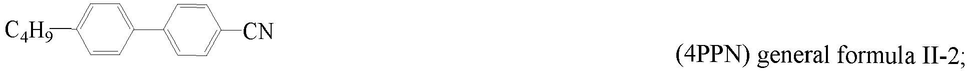 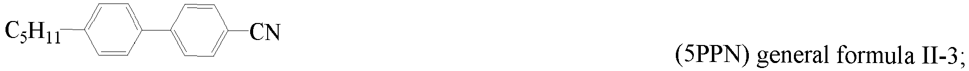 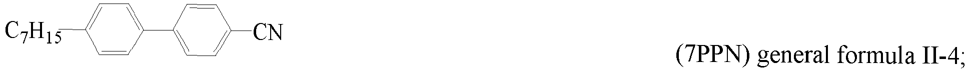 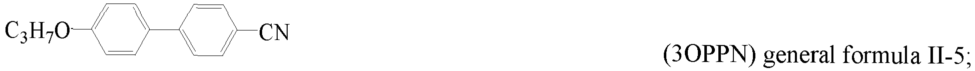 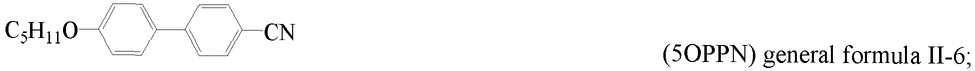 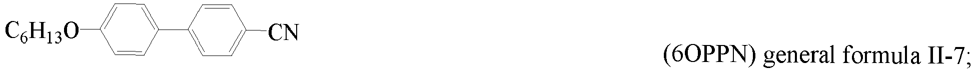 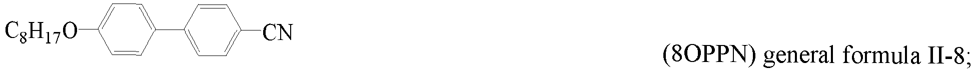 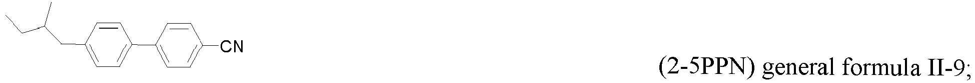 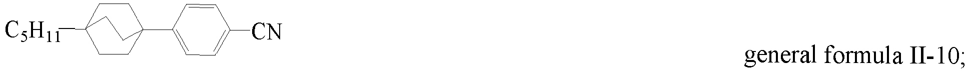 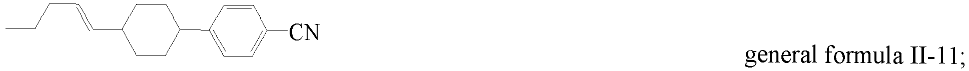 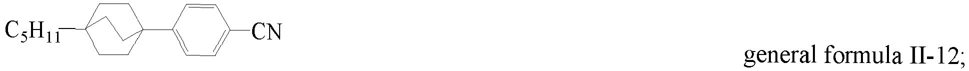 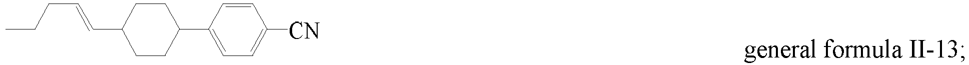 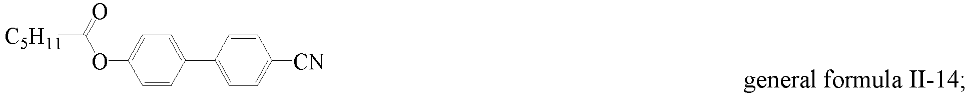 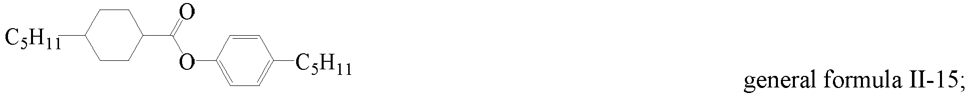 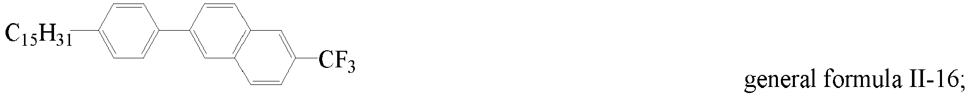 as a further preferred embodiment, the compound of the general formula II is further selected from the compounds composed of the general formula II -1 to the general formula II -9.

In the present application, as a preferred embodiment, the compound of the general formula III may be selected from any one of the following compounds: 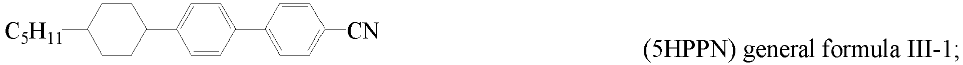 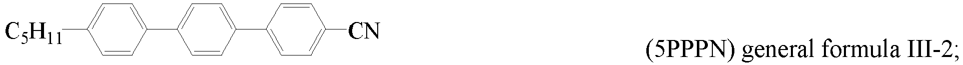 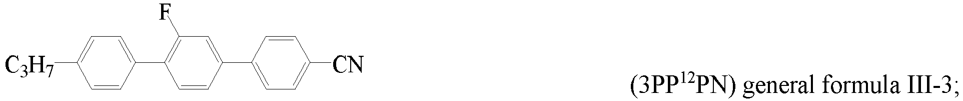 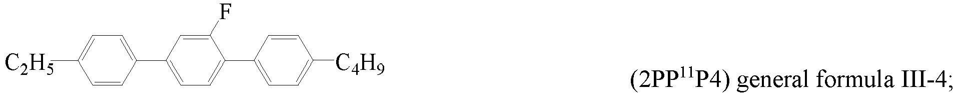 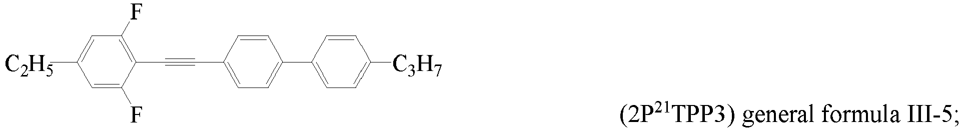 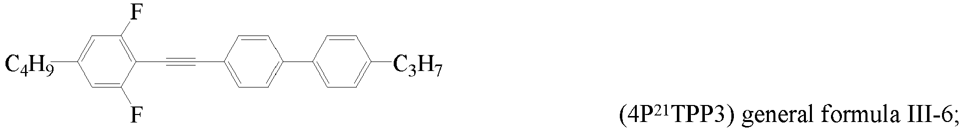 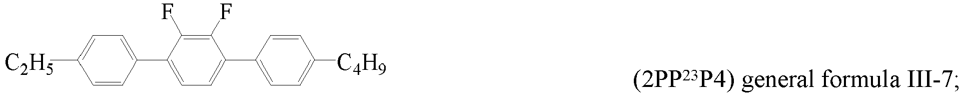 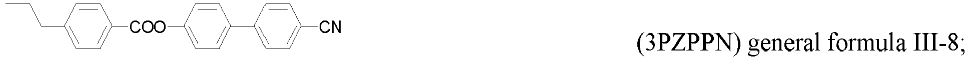 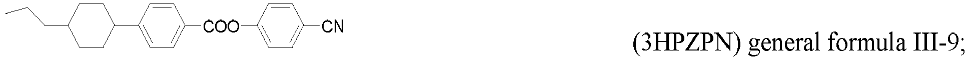 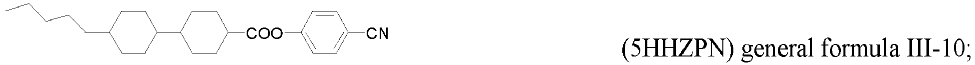 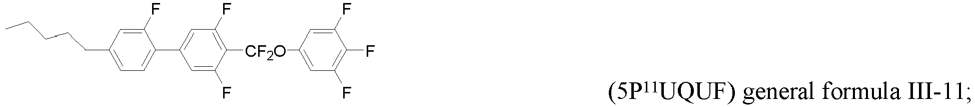 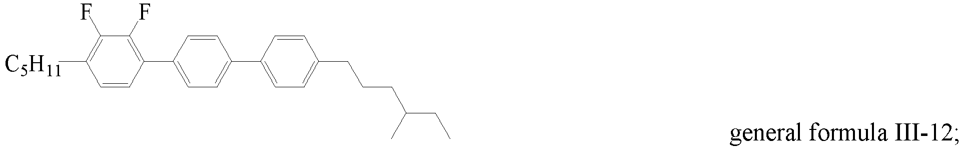 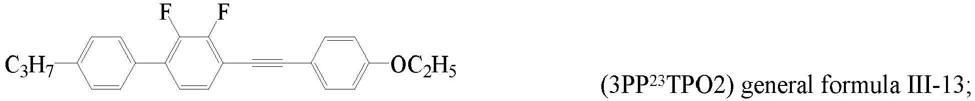 as a further preferred embodiment, the compound of the general formula III is further selected from the compound composed of the general formula III-1 to the general formula III-10.

In the present application, as a preferred embodiment, the compound of the general formula IV may be selected from any of the following compounds: 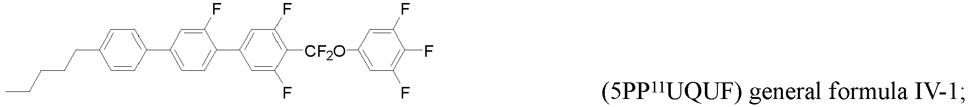 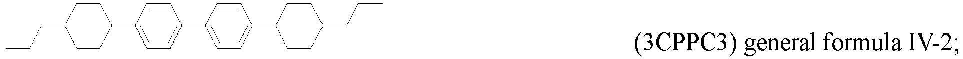 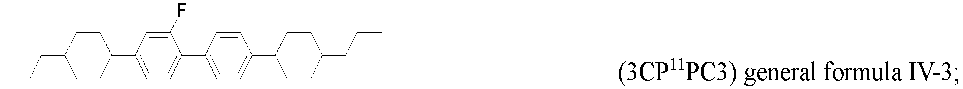 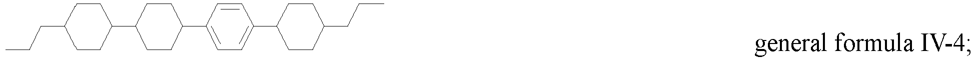 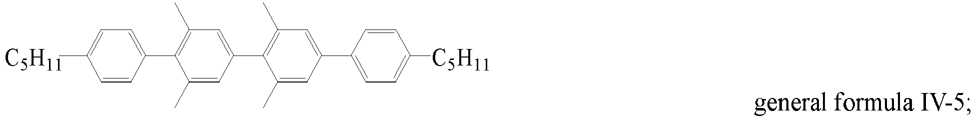 as a further preferred embodiment, the compound of the general formula IV is further selected from the compound composed of the general formula IV-1 to the general formula IV-4.

In the present application, as a preferred embodiment, the chiral compound is at least one of R01, R02, R03, R04, R05, R06, L01, L02, L03, L04 and L05. Preferably, the chiral compound accounts for 5-20% of a total mass of the liquid crystal composition.

In the present application, as a preferred embodiment, the liquid crystal composition also comprises at least one polymerizable monomer; as a further preferred embodiment, the polymerizable monomer can be but not limited to a photo polymerization monomer and a thermal polymerization monomer, etc., and the photo polymerization monomer can be but not limited to an acrylate monomer and a vinyl ether monomer, etc., such as PM001 and a commercially available ultraviolet curing adhesive NOA65, etc., and the thermal polymerization monomer can be but not limited to an epoxy resin. As a further preferred embodiment, the liquid crystal composition also comprises at least one polymerizable initiator. The polymerizable initiator can be any one of the following photoinitiators: photoinitiator 184 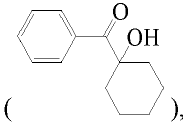 photoinitiator 907 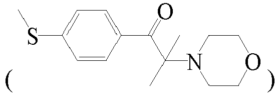 and TPO 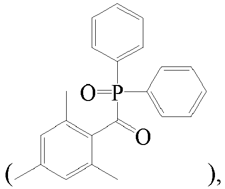 etc.

In order to achieve the objective, the present application provides a high-performance bistabl liquid crystal composition with a wide working temperature range,and a bistable liquid crystal light modulating device. The bistable liquid crystal light modulating device comprises a first transparent conductive substrate and a second transparent conductive substrate, wherein the first transparent conductive substrate and the second transparent conductive substrate are disposed opposite to one another. A liquid crystal layer is disposed in between the first transparent conductive substrate and the second transparent conductive substrate, wherein the liquid crystal layer comprises the liquid crystal composition according to any one of claims 1 to 21; wherein the liquid crystal layer can be switched between at least two zero-electric field stable states by applying an external electric field to the said first and second transparent conductive substrates, wherein one of the stable state is a transparent state that transmits incident light, and the other a hazy state that scatters incident light.

Preferably, the haze of the transmission state is not more than 10%; further, the haze of the transmission state is not more than 5%; even further, the haze of the transmission state is not more than 3%. Preferably, a haze of the hazy state is not less than 85%.; further, the haze of the hazy state is not less than 90%.

In the present application, a group structure in the liquid crystal compound is further identified by codes, which are shown in Table 1.

**Table 1 Code of liquid crystal compound group structure**

| Code | Unit structure of group |
|---|---|
| E | 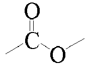 |
| Ei | 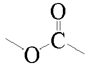 |
| H | 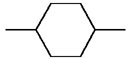 |
| O | ―O― |
| P | 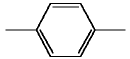 |
| P¹¹ | 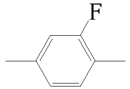 |
| P¹² | 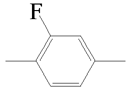 |
| P²¹ | 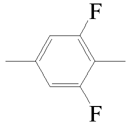 |
| P²² | 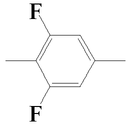 |
| P²³ | 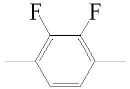 |
| T | 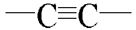 |
| F | ―F |
| N | 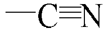 |
| n or m | -CₙH₂ₙ₊₁ or -CₘH₂ₘ₊₁ |

Among them, for example, n or m is 3, that is, it is represented as alkyl -C₃H₇. Furthermore, the group structure in Table 1 is only a partial group structure in the liquid crystal compound of the present application.

In the present application, the structure molecular formulas and codes of the chiral agent and other added compounds added to the liquid crystal compound are also provided, and the structural molecular formula is only a partial molecular formula of the chiral agent and other added compounds in the present application, and the structural molecular formulas and corresponding code identifiers are shown in Table 2.

**Table 2 Structural molecular formula of the chiral agent and other added compounds added to the liquid crystal compound and the corresponding code**

| Code | Structural molecular formula |
|---|---|
| R01 | 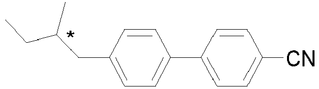 |
| L01 | |
| R02 | 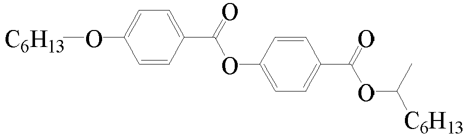 |
| L02 | |
| R03 | 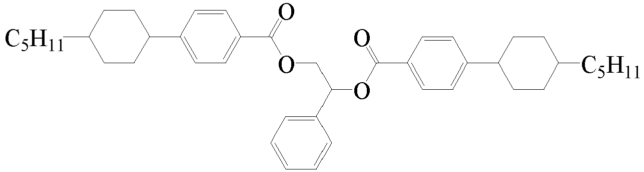 |
| L03 | |
| R04 | 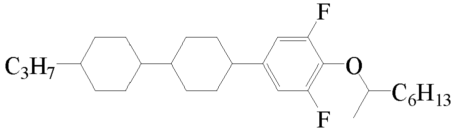 |
| L04 | |
| R05 | 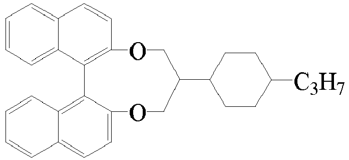 |
| L05 | |
| R06 | 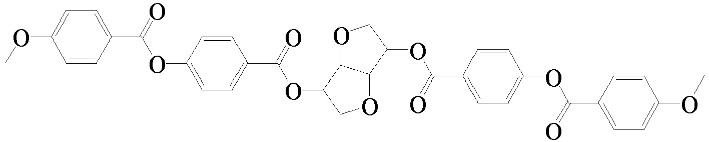 |
| PM001 | 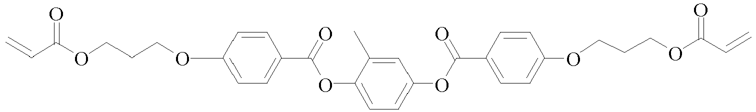 |

To verify that the technical solutions provided by the present application have excellent technical effects, the present application also provides 4 groups of liquid crystal compounds as comparative examples and 7 groups of liquid crystal compounds as examples, and these liquid crystal compounds were prepared into corresponding bistable liquid crystal light modulating devices and tested for performance.

### 1) Test method for the clearing point and N-TB point of the liquid crystal mixture

A sample was placed on an MK2000 temperature control table, rapidly heated from room temperature to 60°C and then stabilized for 3 minutes, and continued to be heated with a heating rate changed to 5°C/min, and when the liquid crystal was completely clear, it was recorded as a clearing point; the temperature was rapidly reduced to -30°C and stabilized for 5 minutes, and then the heating rate was changed to 5°C/min to heat, the temperature at which occurs phase transition (the color of the liquid crystal changed significantly from black brown to brownish yellow) was denoted as an N-TB point; if the temperature was reduced to -30°C without phase transition, it was indicated that the N-TB point was less than -30°C.

### 2) light modulating device structure

The bistable liquid crystal light modulating device comprises a first transparent conductive substrate and a second transparent conductive substrate, wherein the first transparent conductive substrate and the second transparent conductive substrate are disposed opposite to one another; A liquid crystal layer is disposed in between the first transparent conductive substrate and the second transparent conductive substrate, wherein the liquid crystal layer comprises the above liquid crystal composition. The thickness of the bistable light modulating device could be selected according to the haze requirements. Wherein, the liquid crystal composition was perfused into the liquid crystal cell, and the light modulating device was irradiated by using a UV low-pressure mercury lamp with 365 nm at an intensity of 10mw/cm² for 60 seconds, so that the polymerizable monomer NOA65 in the liquid crystal composition was polymerized.

### 3) Haze test method

The liquid crystal composition in the above example of the present application was infused into a VA liquid crystal cell with 20 µm under vacuum, and prepared for testing after the sealing is completed. Firstly, a WGT-S haze meter was turned on, and the test started after a light source was stable for 30 minutes. By applying a suitable high voltage, the liquid crystal molecule was driven to the homec tropic texture state, and after power off for 50 seconds, a Test button was clicked to test and the transmission state haze was read and recorded; by applying a suitable low voltage, the liquid crystal molecule was driven from the planar texture state to the focal conic texture state, and the Test button was clicked to test and the haze of the light scattering state was read and recorded.

### Comparative Example 1

| Monomer component | Proportion wt% | Performance |
|---|---|---|
| 2PPN | 5.1 | Clearing point: 88.5°C; |
| 5PPN | 13.5 | N-TB phase transition temperature: - 12°C; |
| SOPPN | 10.9 | |
| 6OPPN | 5.1 | The haze of the hazy state at 25°C: 90.1%; |
| 3PP¹¹PN | 10.6 | |
| 5HPPN | 5.9 | The haze of the transmission state at |
| 5PPPN | 2.9 | 25°C: 1.1%; |
| NPP9PPN | 15 | The transmission state could not be recovered at -10°C. |
| NPP7PPN | 15 | |
| R01 | 16 | |
| Total | 100 | |

### Comparative Example 2

| Monomer component | Proportion wt% | Performance |
|---|---|---|
| 2PPN | 5 | Clearing point: 84.4°C; |
| 5PPN | 13 | |
| SOPPN | 10 | |
| 6OPPN | 3 | N-TB phase transition temperature: - 1.7°C; |
| 3PP¹¹PN | 8 | |
| 5HPPN | 10 | The haze of the hazy state at 25°C: 91.8%; |
| NPP11PPN | 6 | |
| NPP9PPN | 7 | The haze of the transmission state at 25°C: 2.50%; |
| NPP7PPN | 18 | |
| NP¹²P7PP¹¹N | 5 | The transmission state could not berecovered at -10°C. |
| R01 | 15 | |
| Total | 100 | |

### Comparative Example 3

| Monomer component | Proportion wt% | Performance |
|---|---|---|
| 2PPN | 12 | Clearing point: 65.4°C; |
| 5PPN | 15 | N-TB phase transition temperature: - 30°C; |
| SOPPN | 15 | |
| 6OPPN | 10 | The haze of the hazy state at 25°C: 85.8%; |
| 3PP¹¹PN | 2 | |
| 3PP¹²PN | 2 | The haze of the transmission state at 25°C: 3.20%; |
| 5PPPN | 2 | |
| NPP11PPN | 5 | The transmission was recovered for 4 |
| NPP9PPN | 5 | min at -10°C. |
| NPP7PPN | 18 | |
| NP¹²P7PP¹¹N | 2 | |
| R01 | 12 | |
| Total | 100 | |

### Comparative Example 4

| Monomer component | Proportion wt% | Performance |
|---|---|---|
| 2PPN | 2 | Clearing point: 130.4°C; |
| 5PPN | 5 | |
| SOPPN | 2 | |
| 6OPPN | 2 | |
| 3PP¹¹PN | 13 | N-TB phase transition temperature: - 15°C; |
| 3PP¹²PN | 13 | |
| 5PPPN | 10 | The haze of the hazy state at 25°C: 88.5%; |
| 5HPPN | 15 | |
| NPP11PPN | 5 | The haze of the transmission state at 25°C: 15.5%; |
| NPP9PPN | 4 | |
| NPP7PPN | 12 | The transmission could not berecovered at -10°C. |
| NP²²P7PP²¹N | 3 | |
| R01 | 14 | |
| Total | 100 | |

### Example 1

| Monomer component | Proportion wt% | Performance |
|---|---|---|
| 2PPN | 4 | Clearing point: 109.0°C; |
| 5PPN | 8 | N-TB phase transition temperature: less than -30°C; |
| SOPPN | 6 | |
| 6OPPN | 2 | The haze of the hazy state at 25°C: 91.16%; |
| 3PP¹¹PN | 15 | |
| 5HPPN | 5 | The haze of the transmission state at |
| 5PPPN | 10 | 25°C: 2.48%; |
| 5PP¹¹UQUF | 4 | The transmission was recovered for 3 min at -10°C. |
| 3CPPC3 | 2 | |
| NPP9PPN | 6 | |
| NPP7PPN | 22 | |
| R01 | 16 | |
| Total | 100 | |

### Example 2

| Monomer component | Proportion wt% | Performance |
|---|---|---|
| 2PPN | 2 | Clearing point: 118.4°C; |
| 5PPN | 8 | |
| SOPPN | 5 | |
| 6OPPN | 5 | |
| 3PP¹¹PN | 10 | |
| 3PP¹²PN | 5 | N-TB phase transition temperature: less than -30°C; |
| 5PPPN | 5 | |
| 5HPPN | 5 | The haze of the hazy state at 25°C: 89.5%; |
| 5PP¹¹UQUF | 7 | |
| 3CPPC3 | 5 | The haze of the transmission state at 25°C: 3.50%; |
| 3CP¹¹PC3 | 5 | |
| NPP11PPN | 5 | The transmission was recovered for 3 min at -10°C. |
| NPP9PPN | 4 | |
| NPP7PPN | 13 | |
| NP²²P7PP²¹N | 3 | |
| R01 | 13 | |
| Total | 100 | |

### Example 3

| Monomer component | Proportion wt% | Performance |
|---|---|---|
| 2PPN | 5 | Clearing point: 90.2°C; |
| 5PPN | 10 | N-TB phase transition temperature: less than -27°C; |
| SOPPN | 7 | |
| 6OPPN | 5 | The haze of the hazy state at 25°C: 90.4%; |
| 3PP¹¹PN | 10 | |
| 3PP¹²PN | 5 | The haze of the transmission state at 25°C: 1.2%; |
| 5HPPN | 7 | |
| 5PPPN | 6 | The transmission was recovered for 4 min at -10°C. |
| NP²²P7PP²¹N | 5 | |
| NP¹²P7PP¹¹N | 5 | |
| FFBB9BBFF | 3 | |
| FFBB11BBFF | 4 | |
| NPP7PPN | 18 | |
| R01 | 10 | |
| Total | 100 | |

### Example 4

| Monomer component | Proportion wt% | Performance |
|---|---|---|
| 2PPN | 4.0 | Clearing point: 110.0°C; |
| 5PPN | 9.5 | |
| 2-5PPN | 6.0 | |
| SOPPN | 5.0 | |
| 6OPPN | 2.0 | N-TB phase transition temperature: less than -30°C; |
| 3PP¹¹PN | 9.5 | |
| 3PP¹²PN | 7.0 | The haze of the hazy state at 25°C: 91.4%; |
| 5HPPN | 10.0 | |
| 5PPPN | 8.0 | The haze of the transmission state at 25°C: 2.51%; |
| 3PP²³TPO2 | 0.5 | |
| 5PP¹¹UQUF | 1.0 | The transmission was recovered for 2 min at -10°C. |
| NP²²P7PP²¹N | 2.0 | |
| NP¹²P7PP¹¹N | 2.0 | |
| NPP9PPN | 5.0 | |
| NPP7PPN | 17.5 | |
| FFBB9BBFF | 1.0 | |
| FFBB11BBFF | 1.0 | |
| R01 | 8.0 | |
| Total | 100 | |

### Example 5

| Monomer component | Proportion wt% | Performance |
|---|---|---|
| 2PPN | 5 | Clearing point: 113.1°C; |
| 5PPN | 9 | |
| SOPPN | 5.0 | |
| 6OPPN | 3.0 | |
| 3PP¹¹PN | 10 | |
| 3PP¹²PN | 7.0 | N-TB phase transition temperature: less than -30°C; |
| 5HPPN | 7.5 | |
| 5PPPN | 8.5 | The haze of the hazy state at 25°C: 91.02%; |
| 5PP¹¹UQUF | 5 | |
| NP²²P7PP²¹N | 3 | The haze of the transmission state at 25°C: 2.31%; |
| NPP9PPN | 3.5 | |
| NPP7PPN | 19.5 | The transmission was recovered for 1 min at -10°C. |
| 2CB7CB2 | 1.0 | |
| 4CB7CB4 | 1.0 | |
| 3CB7CB3 | 1.0 | |
| R01 | 11.0 | |
| Total | 100 | |

### Example 6

In this example, a monomer content of the preferred general formula IV is increased to 10%.

| Monomer component | Proportion wt% | Performance |
|---|---|---|
| 2PPN | 5 | Clearing point: 108.1°C; |
| 5PPN | 10 | N-TB phase transition temperature: |
| 2-5PPN | 3 | less than -30°C; |
| SOPPN | 5.0 | The haze of the hazy state at 25°C: 91.52%; |
| 6OPPN | 3.0 | |
| 3PP¹¹PN | 5 | The haze of the transmission state at 25°C: 2.31%; |
| 3PP¹²PN | 7.0 | |
| 5HPPN | 7.0 | The transmission was recovered for 2 min at -10°C. |
| 5PPPN | 7 | |
| 3PPZPN | 2 | |
| 5PP¹¹UQUF | 5 | |
| 3CPPC3 | 4 | |
| 3CP¹¹PC3 | 1 | |
| NP²²P7PP²¹N | 3 | |
| NPP9PPN | 3.5 | |
| NPP7PPN | 19.5 | |
| 3CB7CB3 | 3.0 | |
| R01 | 7.0 | |
| Total | 100 | |

### Example 7

| Monomer component | Proportion wt% | Performance |
|---|---|---|
| 2PPN | 5 | Clearing point: 113.1°C; |
| 5PPN | 9 | |
| SOPPN | 5.0 | |
| 6OPPN | 3.0 | N-TB phase transition temperature: less than -30°C; |
| 3PP¹¹PN | 10 | |
| 3PP¹²PN | 7.0 | The haze of the hazy state at 25°C: 91.02%; |
| 5HPPN | 7.5 | |
| 5PPPN | 8.5 | The haze of the transmission state at 25°C: 2.5%; |
| 5PP¹¹UQUF | 5 | |
| NP²²P7PP²¹N | 3 | The transmission recovered forwas 10 min at -10°C. |
| NPP9PPN | 3.4 | |
| NPP7PPN | 19.5 | |
| 2CB7CB2 | 1.0 | |
| 4CB7CB4 | 1.0 | |
| 3CB7CB3 | 1.0 | |
| R01 | 10.5 | |
| NOA65 | 0.5 | |
| Photoinitiator 184 | 0.1 | |
| Total | 100 | |

In summary, the present application provides a liquid crystal composition that comprises four compounds with different structural formulas and a chiral compound, wherein four compounds with different structural formulas are at least one compound selected from the general formula I, at least one compound selected from the general formula II, at least one compound selected from the general formula III and at least one compound selected from the general formula IV By optimizing the content of each component in the liquid crystal composition, the clearing point is increased while the N-TB phase transition point is reduced. The present application also provides a bistable liquid crystal light modulating device prepared by applying the above liquid crystal composition, which widens the working temperature range of the bistable liquid crystal light modulating device and improves its practical value.,so it is widely used in fields such as outdoor curtain walls, indoor partition walls, and smart car windows, etc.

Although this specification is described in accordance with embodiments, not each embodiment contains only an independent technical solution, this narration mode of the description is only for clarity, those skilled in the art should regard the specification as a whole, and the technical solutions in each embodiment can be appropriately combined to form other embodiments that can be understood by a skilled person in the art.

A series of detailed descriptions listed above are only specific descriptions of the feasible embodiments of the present application, which are not intended to limit the protection scope of the present application, and any equivalent embodiments or changes that do not depart from the spirit of the present application shall be comprised in the protection scope of the present application.

## Claims

1. A liquid crystal composition, comprising at least one compound selected from general formula I, at least one compound selected from general formula II, at least one compound selected from general formula III, at least one compound selected from general formula IV and at least one chiral compound
R1-MG1-X-MG2-R2 (I); 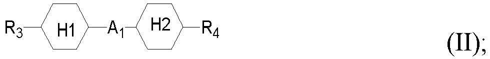 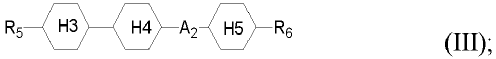 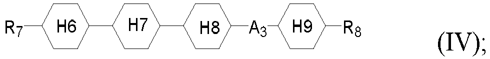
wherein, R1 and R2 are each independently -H, -F, -Cl, -CN, -NCS or an alkyl group having 1-25 C atoms;
MG1 and MG2 are each independently a mesogenic group;
X is a spacer group comprising 1 , 3 or 5 to 40 C atoms;
H1, H2, H3, H4, H5, H6, H7, H8 and H9 are each independently a first cyclic group selected from 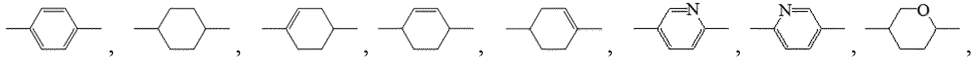 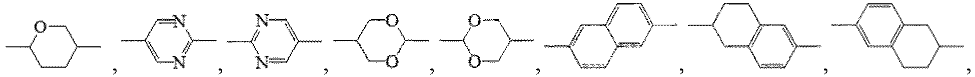 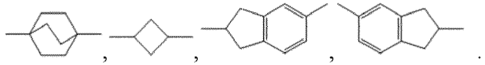
A₁, A₂ and A₃ are each independently -COO-, -OCO-, -CF₂O-, -OCF₂-, -CH₂O-, -OCH₂-, -C=C-, - CH=CH-, -CF₂CF₂-, -CF=CF-, a single bond or -(CH2)ₐ-, wherein a denotes an integer from 2 to 10;
R₃, R₄, R₅, R₆, R₇ and R₈ are each independently -CN, -F, -Cl, -NCS, -OCF₃, -CF₃ or an alkyl group having 1 to 25 C atoms.

2. The liquid crystal composition according to claim 1, wherein one or more H atoms in the alkyl group having 1 to 25 C atoms can be each independently substituted by halogen or -CN; one or more nonadjacent -CH₂- in the alkyl group can be each independently substituted by -O-, -S-, - NH-, -N(CH₃)-, -CO-, -COO-, -OCO-, -OCOO-, -SCO-, -COS-, -CH=CH-, -CH=CF-, -CF=CF- or -C=C- in such a manner that oxygen atoms are not linked directly to one another.

3. The liquid crystal composition according to claim 1, wherein one or more nonadjacent -CH₂-in the linear-chain or branched-chain alkylene group can be each independently substituted by - O-, -S-, -NH-, -N(CH₃)-, -CO-, -COO-, -OCO-, -OCOO-, -SCO-, -COS-, -CH=CH-, -CH=CF-, - CF=CF-, -C=C- or -CH(CN)- in such a manner that oxygen atoms and two groups selected from -OCO-, -SCO-, -OCOO-, -COS-, -COO- or -CH=CH- are each independently not linked directly to one another.

4. The liquid crystal composition according to claim 1, wherein one or more H atoms in the first cyclic group can be each independently substituted by halogen, an alkyl chain group having 1 to 10 C atoms or an ester group.

5. The liquid crystal composition according to claim 1, wherein one or more nonadjacent -CH₂-in the alkyl chain group having 1 to 25 C atoms can be each independently substituted by -O-, - S-, -NH-, -N(CH₃)-, -CO-, -COO-, -OCO-, -OCOO-, -SCO-, -COS-, -CH=CH-, -CH=CF-, - CF=CF- or -C=C-; one or more H atoms in the alkyl chain group can be each independently substituted by halogen, -CN or -CH₃.

6. The liquid crystal composition according to claim 1, wherein MG1 and MG2 are of the general formula V 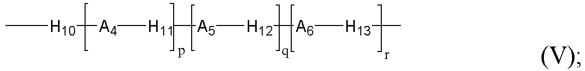
wherein, H₁₀, H₁₁, H₁₂ and H₁₃ are each independently a second cyclic group selected from 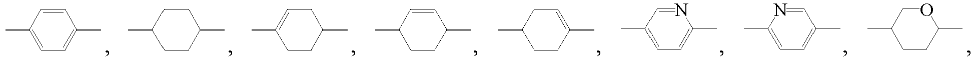 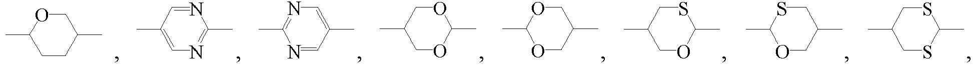 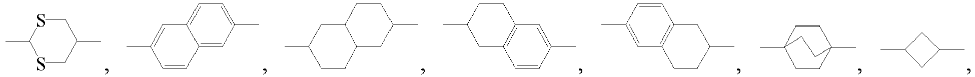 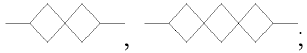
A₄, A₅ and A₆ are each independently -COO-, -OCO-, -OCOO-, -OCH₂-, -CH₂O-, -CF₂O-, -(CH₂)₂-, -(CH₂)₄-, -C=C-, -CH=CH-, -CF₂CF₂-, -CF=CF-, -CH=CH-COO-, -OCO-CH=CH- or a single bond;
p in each occurrence independently is 0 or 1;
q in each occurrence independently is 0 or 1;
r in each occurrence independently is 0 or 1.

7. The liquid crystal composition according to claim 6, wherein one or more H atoms in the second cyclic group can be each independently substituted by halogen, CN or an alkyl group having 1 to 7 C atoms.

8. The liquid crystal composition according to claim 1, wherein the spacer group X is of formula VI 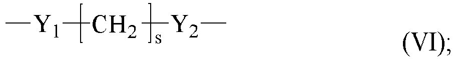 wherein, Y₁ and Y₂ are each independently -COO-, -OCO-, -O-, -CH=CH-, -CF₂O-, -OCF₂-, - CF₂CF₂- or a single bond, and s is an odd number from 3 to 13.

9. The liquid crystal composition according to any one of claims 1 to 8, wherein the liquid crystal composition contains 10% to 50% by mass of at least one compound selected from the compounds represented by general formula I.

10. The liquid crystal composition according to claim 9, wherein the liquid crystal composition contains 20% to 40% by mass of at least one compound selected from the compounds represented by general formula I.

11. The liquid crystal composition according to claim 9, wherein the liquid crystal composition contains 25% to 35% by mass of at least one compound selected from the compounds represented by general formula I.

12. The liquid crystal composition according to any one of claims 1 to 8, wherein the liquid crystal composition contains 10% to 34.5% by mass of at least one compound selected from the compounds represented by general formula II.

13. The liquid crystal composition according to claim 12, wherein the liquid crystal composition contains 15% to 34.5% by mass of at least one compound selected from the compounds represented by general formula II.

14. The liquid crystal composition according to any one of claims 1 to 8, wherein the liquid crystal composition contains 20% to 50% by mass of the sum of compound selected from the compounds represented by general formula III and IV

15. The liquid crystal composition according to claim 14, wherein the liquid crystal composition contains 20% to 40% by mass of the sum of compound selected from the compounds represented by general formula III and IV.

16. The liquid crystal composition according to claim 14, wherein the liquid crystal composition contains 0% to 20% by mass of at least one compound selected from the compounds represented by general formula IV

17. The liquid crystal composition according to claim 14, wherein the liquid crystal composition contains 1% to 20% by mass of at least one compound selected from the compounds represented by general formula IV

18. The liquid crystal composition according to any one of claims 1 to 8, wherein the chiral compound comprises at least one of R01, R02, R03, R04, R05, R06, L01, L02, L03, L04 and L05.

19. The liquid crystal composition according to any one of claims 1 to 8, wherein the liquid crystal composition contains 5% to 20% by mass of the chiral compound.

20. The liquid crystal composition according to any one of claims 1 to 8, wherein the liquid crystal composition further comprises at least one polymerizable monomer.

21. The liquid crystal composition according to claim 20, wherein the liquid crystal composition further comprises at least one polymerizable initiator.

22. A liquid crystal light modulating device, comprising a first transparent conductive substrate and a second transparent conductive substrate, wherein the first transparent conductive substrate and the second transparent conductive substrate are disposed opposite to one another;
a liquid crystal layer is disposed in between the first transparent conductive substrate and the second transparent conductive substrate, wherein the liquid crystal layer comprises the liquid crystal composition according to any one of claims 1 to 21; wherein the liquid crystal layer can be switched between at least two zero-electric field stable states by applying an external electric field to the said first and second transparent conductive substrates, wherein one of the stable state is a transparent state that transmits incident light, and the other a hazy state that scatters incident light.

23. The liquid crystal light modulating device according to claim 22, wherein the haze of the transmission state is not more than 10%.

24. The bistable liquid crystal light modulating device according to claim 22, wherein the haze of the hazy state is not less than 85%.
